Europäisches Patentamt

European Patent Office

Office européen des brevets

(19)

(11) Veröffentlichungsnummer: **0 026 733**
**B1**

(12) **EUROPÄISCHE PATENTSCHRIFT**

(45) Veröffentlichungstag der Patentschrift:
18.05.83

(51) Int. Cl.³: **H 02 G 15/103**

(21) Anmeldenummer: **80730063.7**

(22) Anmeldetag: **27.08.80**

(54) Vorgefertigter, einteilig winkelförmig gestalteter Muffenkörper.

(30) Priorität: **28.09.79 DE 2939932**

(43) Veröffentlichungstag der Anmeldung:
**08.04.81 Patentblatt 81/14**

(45) Bekanntmachung des Hinweises auf die Patenterteilung:
**18.05.83 Patentblatt 83/20**

(84) Benannte Vertragsstaaten:
**AT CH FR GB LI**

(56) Entgegenhaltungen:

**DE-A-2 119 804**
**DE-A-2 726 403**
**DE-U-7 928 015**
**FR-A-2 204 066**
**US-A-3 323 097**
**US-A-3 702 372**

(73) Patentinhaber: **SIEMENS AKTIENGESELLSCHAFT,
Berlin und München Wittelsbacherplatz 2,
D-8000 München 2 (DE)**

(72) Erfinder: **Goehlich, Lothar, Westphalweg 16B,
D-1000 Berlin 42 (DE)**
Erfinder: **Haug, Jürgen, Altonaer Strasse 7,
D-1000 Berlin 21 (DE)**

ACTORUM AG

Vorgefertigter, einteilig winkelförmig gestalteter Muffenkörper

Die Erfindung liegt auf dem Gebiet der Garnituren für elektrische Kabel und ist bei der konstruktiven Ausgestaltung einer steckbaren Verbindung zwischen einem kunststoffisolierten, geschirmten Starkstromkabel und einem elektrischen Gerät anzuwenden.

Bei der konstruktiven Ausgestaltung von Garnituren für Starkstromkabel ist man zunehmend auf eine Verkürzung der Montagezeit bedacht. Dies kann durch Verwendung vorgefertigter Garnituren oder Garniturenteile erreicht werden, die am Montageort im wesentlichen nur zusammengesteckt werden. Steckbare oder aufschiebbare Garnituren und Garniturenteile werden im wesentlichen für Starkstromkabel mit extrudierter Kunststoffisolierung wie Polyäthylen oder vernetztem Polyäthylen entwickelt und bestehen hauptsächlich aus einem elastischen Isolierkörper aus Silikonkautschuk oder einem Äthylen-Propylen-Terpolymerisat, der mit Elementen zur Steuerung des elektrischen Feldes versehen ist. Bei den Steuerelementen handelt es sich einerseits um Deflektoren, die beim Betrieb der Garnitur auf Erdpotential liegen, andererseits um einen Abschirmkörper, der die Leiterverbindungsstelle umgibt und beim Betrieb der Garnitur auf Hochspannungspotential liegt. Derartige Garnituren gibt es sowohl in gestreckter Form zur Herstellung von Verbindungsmuffen als auch in knieförmiger bzw. abgewinkelter Form zum Anschluss eines Kabels an ein elektrisches Gerät.

Eine bekannte Garnitur in gestreckter Form besteht aus einem vorgefertigten manschettenartigen elastischen Isolierkörper, der an seiner Aussenseite eine elektrisch leitende Schicht aufweist und der einen elektrisch leitenden Abschirmkörper umfasst. Der Abschirmkörper ist zylindrisch ausgebildet und in den Isolierkörper eingelassen und besteht ebenfalls aus elastischem Material. Er ist durch und durch oder nur an der Aussenseite elektrisch leitend. Der elektrische Kontakt zum metallenen Verbindungselement der Leiter ist mittels gesonderter Kontaktelemente in Form von Federpaketen hergestellt (DE-B2-1 665 222, Zeitschrift «Electrical Review», 1971, Seite 569, DE-A1-2 726 402, DE-A1-2 750 215). Bei einer anderen bekannten Garnitur dieser Art besteht der Abschirmkörper aus einem metallischen Rohr, auf dessen Enden Kappen aus elastischem Material aufgesetzt sind. Das metallische Rohr ist dabei zugleich Bestandteil des Leiterverbindungselementes (FR-A-2 204 066).

Bei den bekannten Garnituren in abgewinkelter Form ist ebenfalls ein elastischer Isolierkörper vorgesehen. Der auf Hochspannungspotential liegende Abschirmkörper ist dabei im Knie der Garnitur angeordnet und wird entweder von einem elektrisch leitenden, elastischen Kunststoffkörper, der das Verbindungselement umgibt (DE-A1-2 608 955, DE-A1-2 726 403), oder von dem rohr- und/oder bolzenförmig ausgebildeten Leiterverbindungselement selbst gebildet (US-A-3 323 097). Bei der letztgenannten Ausführungsform sind jedoch die Enden des Abschirmkörpers mit relativ scharfen Kanten versehen.

Ausgehend von einem einteilig vorgefertigten, winkelförmig gestalteten Muffenkörper zur steckbaren Verbindung eines kunststoffisolierten, geschirmten Starkstromkabels mit einem elektrischen Gerät, bei dem in dem mit einer abgewinkelten Längsbohrung versehenen elastischen Isolierkörper ein rohr- und/oder bolzenförmiges, als Schirmelektrode ausgebildetes metallisches Verbindungselement eingebettet ist (US-A-3 323 097), liegt der Erfindung die Aufgabe zugrunde, das als Schirmelektrode ausgebildete Verbindungselement so zu gestalten, dass es bei einfachem konstruktivem und fertigungstechnisch günstigem Aufbau hochspannungstechnischen Anforderungen genügt.

Zur Lösung dieser Aufgabe ist gemäss der Erfindung vorgesehen, dass das rohr- und/oder bolzenförmige metallische Verbindungselement geradlinig ausgebildet ist und an seinem geräteseitigen Ende einen Stecker oder eine Steckbuchse enthält, deren Achse winklig zur Achse des Verbindungselementes verläuft, dass an beiden Enden des Verbindungselementes manschettenartige Verlängerungen aus elastischem Material angeordnet sind und dass die am geräteseitigen Ende aufgesetzte manschettenartige Verlängerung eine erste Bohrung zum Aufschieben der Verlängerung auf das Verbindungselement und eine zweite, winklig dazu verlaufende Bohrung zur Steuerung des elektrischen Feldes enthält.

Bei einem derart ausgebildeten Muffenkörper ist das den Abschirmkörper bildende Verbindungselement an seinen Enden elastisch ausgebildet und mit hochspannungstechnisch günstigen Abrundungen versehen. Diese elastische Ausbildung und die Abrundungen gewährleisten die elektrische Sicherheit im Bereich des Presssitzes des Isolierkörpers auf der Isolierung der zu verbindenden Leiter. Die hierzu vorgesehenen manschettenartigen Verlängerungen bestehen zweckmässig aus elastischem Isoliermaterial mit einer Beschichtung aus elektrisch leitendem Kunststoff. In diesem Fall sind die elastischen Eigenschaften der manschettenartigen Verlängerungen soweit wie möglich an die elastischen Eigenschaften des Isolierkörpers angepasst. Dies gilt insbesondere dann, wenn für die manschettenartigen Verlängerungen und den Isolierkörper das gleiche Basismaterial verwendet wird. Besonders zweckmässig ist es, als Material sowohl für den Isolierkörper als auch für die manschettenartigen Verlängerungen Silikonkautschuk vorzusehen.

Die manschettenartigen Verlängerungen sind zweckmässig soweit wie möglich in den Isolierkörper eingebettet. Dies kann man dadurch erreichen, dass der Innendurchmesser der äusseren Enden der etwa rohrförmig gestalteten manschettenartigen Verlängerungen grösser als der Durchmesser der Längsbohrung des Isolierkörpers ist.

Bei der Herstellung des Isolierkörpers wird das vorgefertigte Verbindungselement mit dem Isoliermaterial des Isolierkörpers umgossen. Um hierbei eine gute Abdichtung des von dem Verbindungselement umschlossenen Hohlraumes gegenüber dem Giesskern zu gewährleisten, ist zweckmässig die kabelseitige manschettenartige Verlängerung zwischen ihrem äusseren Ende und dem Ende des rohrförmigen metallischen Teiles mit einem nach innen ragenden ringförmigen Ansatz versehen, dessen Innendurchmesser dem Durchmesser der Längsbohrung des Isolierkörpers und damit dem Aussendurchmesser des Giesskernes entspricht.

Durch die geradlinige Ausgestaltung des rohr- und/oder bolzenförmigen Verbindungselementes erhält man einen konstruktiv und fertigungstechnisch einfachen Aufbau.

Hinsichtlich der Funktion des neuen Muffenkörpers ist wesentlich, dass das mit den elastischen Manschetten versehene Verbindungselement hohlraumfrei mit dem elastischen Isolierkörper verbunden ist. Dies kann einerseits durch geeignete Werkstoffauswahl, andererseits aber auch durch Verwendung eines leitfähigen Haftvermittlers sichergestellt werden, der vor dem Vergiessen des Verbindungselementes mit dem Isoliermaterial des Isolierkörpers auf die entsprechenden Flächen des Verbindungselementes aufgebracht wird.

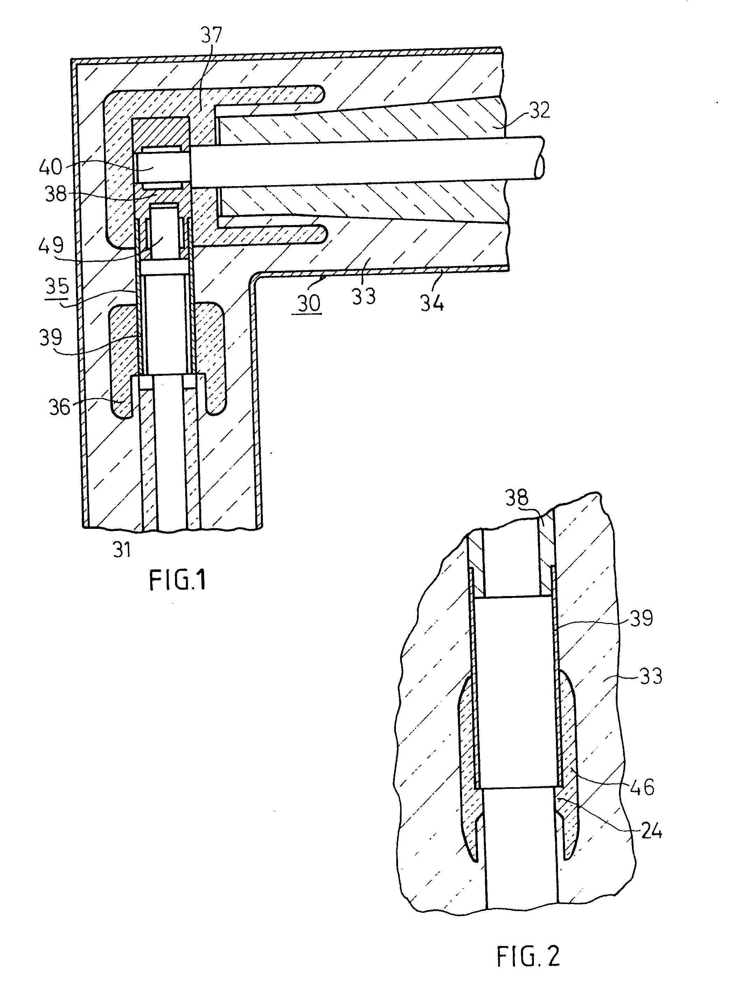

Ausführungsbeispiele von gemäss der Erfindung ausgebildeten Muffenkörpern sind in den Figuren 1 und 2 dargestellt.

Fig. 1 zeigt im Ausschnitt sowie in Anlehnung an den aus der DE-A1-2 726 403 bekannten Muffenkörper einen winkelförmig gestalteten Muffenkörper 30 zur Verbindung eines geschirmten Starkstromkabels 31 mit einem elektrischen Gerät, das einen Steckanschluss 32 mit kegelförmigem Isolierkörper aufweist. Der Muffenkörper 30 besteht im wesentlichen aus dem elastischen Isolierkörper 33 mit dem elastischen metallenen Gehäuse 34 sowie dem als Schirmelektrode ausgebildeten Verbindungselement 35 und einem nicht näher dargestellten Deflektor zur Steuerung des elektrischen Feldes am abgesetzten Ende des Starkstromkabels 31.

Das Verbindungselement 35 besteht aus einem metallischen Teil und zwei an den Enden aufgesetzten elastischen, manschettenartigen Verlängerungen 36 und 37. Das metallische Teil besteht dabei aus einem bolzenartigen Kontaktelement 38 und der rohrförmigen Verlängerung 39. Das Kontaktelement 38 enthält zwei winklig zueinander angeordnete Kontaktbuchsen, in die entsprechende Kontaktbolzen 49 (am Kabelende) und 40 (am Ende der elektrischen Durchführung des Gerätes) eingreifen. Die manschettenartige Verlängerung 37 aus elastischem Material weist dabei eine erste Bohrung zum Aufschieben der Verlängerung auf das metallische Teil 38/39 und eine zweite, winklig dazu verlaufende Bohrung auf, in die der Steckanschluss des elektrischen Gerätes hineinragt.

Das rohrförmige metallische Teil 38/39 und die manschettenartigen Verlängerungen 36 und 37 sind in das Isoliermaterial des Isolierkörpers 33 eingebettet und mit diesem stoffschlüssig verbunden. Dieser Stoffschluss wird durch einen geeigneten Haftvermittler erreicht.

Bei dem in Fig. 2 dargestellten kabelseitigen Ende des Verbindungselementes ist die Einbettung der manschettenartigen Verlängerung 46 so gewählt, dass das Ende der elastischen Verlängerung vollständig in das Isoliermaterial eingebettet ist.

Dies dient der elektrischen Sicherheit der Gesamtkonstruktion. Etwas einwärts gerichtet ist an der elastischen Verlängerung weiterhin der ringförmige Ansatz 24 vorgesehen, dessen Innendurchmesser in etwa mit der Bohrung des Isolierkörpers 33 fluchtet. Dieser ringförmige Ansatz 24 dient bei der Herstellung des Isolierkörpers zur Abdichtung des von dem Verbindungselement 35 umgebenen Hohlraumes gegenüber dem Giesskern.

**Patentansprüche**

1. Vorgefertigter, einteilig winkelförmig gestalteter Muffenkörper (30) zur steckbaren Verbindung eines kunststoffisolierten, geschirmten Starkstromkabels (31) mit einem elektrischen Gerät, bei dem in dem mit einer abgewinkelten Längsbohrung versehenen elastischen Isolierkörper (33) ein rohr- und/oder bolzenförmiges, als Schirmelektrode ausgebildetes metallisches Verbindungselement (35) eingebettet ist, dadurch gekennzeichnet, dass das rohr- und/oder bolzenförmige metallische Verbindungselement (35) geradlinig ausgebildet ist und an seinem geräteseitigen Ende einen Stecker oder eine Steckbuchse (38) enthält, deren Achse winklig zur Achse des Verbindungselementes (35) verläuft, dass an beiden Enden des Verbindungselementes (35) manschettenartige Verlängerungen (36, 37, 46) aus elastischem Material angeordnet sind und dass die am geräteseitigen Ende aufgesetzte manschettenartige Verlängerung (37) eine erste Bohrung zum Aufschieben der Verlängerung (37) auf das Verbindungselement (35) und eine zweite, winklig dazu verlaufende Bohrung zur Steuerung des elektrischen Feldes enthält.

2. Muffenkörper nach Anspruch 1, dadurch gekennzeichnet, dass die manschettenartigen Verlängerungen (36, 37, 46) aus elastischem Isoliermaterial mit einer Beschichtung aus elektrisch leitendem Kunststoff bestehen.

3. Muffenkörper nach Anspruch 1 oder 2, dadurch gekennzeichnet, dass die manschettenartigen Verlängerungen (36, 37, 46) aus Silikonkautschuk bestehen.

4. Muffenkörper nach einem der Ansprüche 1 bis 3, dadurch gekennzeichnet, dass der Innendurchmesser des äusseren Endes der etwa rohrförmig gestalteten manschettenartigen Verlängerungen (46, 36, 37) grösser als der Durchmesser der Längsbohrung des Isolierkörpers (33) ist.

5. Muffenkörper nach einem der Ansprüche 1 bis 4, dadurch gekennzeichnet, dass die kabelseitige manschettenartige Verlängerung (46) zwischen ihrem äusseren Ende und dem jeweiligen Ende des rohrförmigen metallischen Teiles (39) mit einem nach innen ragenden ringförmigen Ansatz (24) versehen ist, dessen Innendurchmesser dem Durchmesser der Längsbohrung des Isolierkörpers (33) entspricht.

**Claims**

1. A preformed, integral socket body (30) of angled formation for the plug-in connection of a screened power cable (31) insulated by synthetic resin material, to an electrical device, in which a tubular and/or bolt-shaped metal connecting element (35) forming a screening electrode is embedded in the elastic insulating body (33), which is provided with an angled longitudinal bore, characterised in that the tubular and/or bolt-like metal connecting element (35) is of rectilinear form and at its end adjacent to the device contains a plug or a plug socket (38), the axis of which is at an angle to the axis of the connecting element (35); that sleeve-like extensions (36, 37, 46), consisting of elastic material, are arranged at the two ends of the connecting element (35); and that the sleeve-like extension (37) which is arranged at the end adjacent to the device contains a first bore by means of which the extension (37) is positioned on the connecting element (35), and a second bore, running at an angle to the first bore, which serves to control the electric field.

2. A socket body as claimed in claim 1, characterised in that the sleeve-like extensions (36, 37, 46) consists of insulating material provided with a coating of electrically-conductive synthetic resin material.

3. A socket body as claimed in claim 1 or claim 2, characterised in that the sleeve-like extensions (36, 37, 46) consist of silicone rubber.

4. A socket body as claimed in one of claims 1 to 3, characterised in that the inner diameter of the outer end of the approximately tubular sleeve-like extensions (46, 36, 37) is greater than the diameter of the longitudinal bore of the insulating body (33).

5. A socket body as claimed in one of claims 1 to 4, characterised in that, between its own outer end and the end of the tubular metal component (39), the sleeve-like extension (46) at the cable side, is provided with an inwardly-projecting annular shoulder (24), the inner diameter of which corresponds to the diameter of the longitudinal bore of the insulating body (33).

**Revendications**

1. Manchon coudé préfabriqué et d'une pièce (30) pour la liaison par enfichage entre un câble à courant fort (31) blindé et isolé avec de la matière plastique et un appareil électrique, du type dans lequel, dans un corps isolant (33) élastique et pourvu d'un perçage allongé et coudé, est noyé un élément métallique de liaison (35) de forme tubulaire et/ou en forme de cheville et réalisé sous la forme d'une électrode de blindage, caractérisé par le fait que l'élément métallique de liaison (35) ayant la forme d'un tube et/ou d'une cheville est réalisé suivant une forme rectiligne et comporte au niveau de son extrémité située du côté de l'appareil une fiche ou une douille à fiche (38) dont l'axe fait un angle avec l'axe de l'élément de liaison (35), qu'aux deux extrémités de l'élément de liaison (35) sont disposés des prolongements (36, 37, 46) en un matériau élastique et ayant la forme de manchettes, et que le prolongement (35) en forme de manchette, qui est monté sur l'extrémité située du côté de l'appareil, comporte un premier perçage pour glisser le prolongement (37) sur l'élément de liaison (35) et un second perçage faisant un angle avec le précédent pour commander le champ électrique.

2. Manchon selon la revendication 1, caractérisé par le fait que les prolongements (36, 37, 46) en forme de manchettes sont constitués en un matériau isolant élastique avec un revêtement en une matière plastique électriquement conductrice.

3. Manchon selon la revendication 1 ou 2, caractérisé par le fait que les prolongements (36, 37, 46) en forme de manchettes sont constitués avec un caoutchouc aux silicones.

4. Manchon selon l'une des revendications 1 à 3, caractérisé par le fait que le diamètre intérieur de l'extrémité extérieure des prolongements (46, 36, 37) en forme de manchettes et ayant une allure tubulaire est supérieur au diamètre du perçage longitudinal du corps isolant.

5. Manchon selon l'une des revendications 1 à 4, caractérisé par le fait que le prolongement (46) en forme de manchette et situé du côté du câble est pourvu, entre son extrémité extérieure et l'extrémité concernée de l'élément métallique tubulaire (39), d'un appendice (24) de forme annulaire et saillant vers l'intérieur, le diamètre intérieur de ce dernier correspondant au diamètre du perçage longitudinal du corps isolant (33).

FIG.1

FIG. 2